# EUROPÄISCHE PATENTANMELDUNG

(11) **EP 4 202 236 A1**
(43) Veröffentlichungstag der Anmeldung: **28.06.2023**
(21) Anmeldenummer: 22215318.1
(22) Anmeldetag: 21.12.2022
(51) Int. Cl.: F16B 7/04, F16B 3/00, F16B 2/22

(54) **KLEMMANORDNUNG**

(30) Priorität: 21.12.2021 DE 202021106958 U
(71) Anmelder: RK Rose + Krieger GmbH Verbindungs- und Positioniersysteme, 32423 Minden (DE)
(72) Erfinder: NEUBAUR, Michael, 31655 Stadthagen (DE); SCHULDE, Maximilian, 32425 Minden (DE); BRAUN, Johann, 32369 Rahden (DE)
(74) Vertreter: Kleine, Hubertus

(57) **Zusammenfassung**

Die Erfindung betrifft eine Anordnung mit mindestens einem Klemmverbinder (10) mit mindestens zwei Klemmbacken (11), die über eine Spanneinrichtung verspannbar sind und die eine Aufnahme (14) für ein Rohr (20) oder eine Stange bilden, und mindestens einem in der Aufnahme (14) geklemmten Rohr (20) oder einer in der Aufnahme (14) geklemmten Stange, wobei das Rohr (20) oder die Stange an einer Außenseite zumindest abschnittsweise mindestens eine Längsnut (21) zur Aufnahme einer Passfeder (32) aufweist. Die Anordnung zeichnet sich dadurch aus, dass der Klemmverbinder (10) an einer Klemmfläche der Aufnahme (14) eine ebenfalls in Längsrichtung des Rohres (20) oder der Stange verlaufende Nut (15) aufweist, wobei die Passfeder (32) in die Längsnut (21) und die Nut (15) eingesetzt ist und wobei die Passfeder (32) an einem Klemmring (31) angeordnet ist, der das Rohr (20) oder die Stange zumindest teilweise umgreift.

## Beschreibung

Die Erfindung betrifft eine Anordnung mit mindestens einem Klemmverbinder der mindestens zwei Klemmbacken aufweist, die über eine Spanneinrichtung verspannbar sind und die eine Aufnahme für ein Rohr bzw. eine Stange bilden, und mit mindestens einem in der Aufnahme geklemmten Rohr bzw. einer in der Aufnahme geklemmten Stange, wobei das Rohr oder die Stange an einer Außenseite zumindest abschnittsweise mindestens eine Längsnut zur Aufnahme einer Passfeder aufweist.

Derartige Klemmenanordnungen sind beispielsweise aus den Druckschriften DE 20 2005 013 777 U1 oder DE 20 2014 105 290 U1 bekannt. Sie finden in unterschiedlichsten Anwendungsbereichen Verwendung, beispielsweise zum temporären oder dauerhaften Aufbau von Gestellen oder sonstigen Tragekonstruktionen. Dabei sind die Klemmverbinder z.B. als Kreuzverbinder ausgebildet, mit denen zwei sich kreuzende Rohre oder Stangen miteinander verbunden werden können. Die Rohre oder Stangen werden von dem jeweiligen Klemmverbinder in Aufnahmen eingeklemmt, die von je zwei Klemmbacken gebildet sind, die zum Beispiel mittels einer Schraube als Spanneinrichtung verspannt werden. In der Regel werden aufgrund des geringeren Gewichts Rohre eingesetzt, eine Verwendung von Stangenmaterial ist jedoch genauso möglich.

Um mit den Klemmanordnungen ausreichend stabile Gestelle aufbauen zu können, muss die Verbindung zwischen den Klemmverbindern und den eingeklemmten Rohren bzw. Stangen große Kräfte aufnehmen können, ohne dass es zu einer Bewegung der Rohre bzw. Stangen in der Aufnahme kommt. Dabei hat sich gezeigt, dass insbesondere Verdrehungen des Rohrs bzw. der Stange im Klemmverbinder problematisch sind, wohingegen axiale Verschiebungen des Rohrs bzw. der Stange im Klemmverbinder gut mit den erreichbaren Klemmkräften abgefangen werden können.

Aus der Druckschrift DE 10 2005 057 397 A1 ist eine Klemmanordnung für Stangen bekannt, bei der die Stange an einer Außenseite zumindest abschnittsweise mindestens eine Längsnut aufweist. Am Klemmverbinder ist in der Aufnahme für die Stange eine Passfeder als Zentrierungsmittel angeordnet, die in die mindestens eine Längsnut der Stange eingreift und so eine Verdrehung der Stange in der Aufnahme verhindert. Zur Festlegung der Passfeder am Klemmverbinder sind in die Aufnahme für die Stange Löcher eingebracht, in die die Passfeder vor dem Durchführen der Stange eingesteckt wird, wozu sie an ihrer Rückseite mit entsprechenden Stiften versehen ist. Nachteilig ist, dass die Passfeder bereits vor dem Einsetzen der Stange in der Aufnahme montiert sein muss und somit bereits während des Zusammenbaus die korrekte Winkelausrichtung eingehalten werden muss. Dadurch kann der Zusammenbau der Anordnung deutlich erschwert sein.

Es ist daher eine Aufgabe der vorliegenden Erfindung, eine Klemmanordnung der eingangs genannten Art zu schaffen, bei der eine radiale Verdrehung des Rohrs bzw. der Stange im Klemmverbinder bedarfsweise nach einem Zusammensetzen und Justieren der Anordnung wirksam unterdrückt werden kann.

Diese Aufgabe wird durch eine Klemmanordnung mit den Merkmalen des unabhängigen Anspruchs gelöst. Vorteilhafte Ausgestaltungen und Weiterbildungen sind Gegenstand der abhängigen Ansprüche.

Eine erfindungsgemäße Klemmanordnung zeichnet sich dadurch aus, dass der Klemmverbinder an einer Klemmfläche der Aufnahme eine ebenfalls in Längsrichtung des Rohres oder der Stange verlaufende Nut aufweist, wobei die Passfeder in die Längsnut und die Nut eingesetzt ist.

Bei deckungsgleich aufeinanderliegender Längsnut des Rohrs bzw. der Stange und Nut des Klemmverbinders entsteht ein Kanal im Klemmbereich zwischen dem Klemmverbinder und dem Rohr bzw. der Stange. Die in den Kanal eingesetzte Passfeder verhindert eine Verdrehung dadurch, dass sie ein großes Drehmoment zwischen den Klemmverbinder und dem Rohr bzw. der Stange aufnehmen kann. Vorteilhaft kann diese Passfeder bedarfsweise eingesetzt und ggf. nachgerüstet werden. Ohne großen zusätzlichen Montageaufwand kann so eine Klemmanordnung aufgebaut werden, die sich bei limitierten Klemmkräften dennoch durch eine große Stabilität gegenüber Verdrehungen der Rohre bzw. Stangen in den Klemmverbindern auszeichnet.

Die Passfeder ist dabei an einem Klemmring angeordnet, der das Rohr oder die Stange zumindest teilweise umgreift. So kann die Passfeder leicht handhabbar in die Nut eingeschoben und wieder entnommen werden und ist an der Anordnung fixiert. Während des Aufbaus oder während eines Transports der Anordnung kann zunächst auf eine Verdrehsicherung bei ausgewählten oder allen Klemmverbindern verzichtet werden, indem die entsprechende Passfeder nicht eingeschoben wird bzw. zurückgezogen wird. In vielen Situationen kann so Aufbau und/oder Transport vereinfacht werden. Nach dem Aufbau und der Ausrichtung der Anordnung kann die Passfeder dann eingeschoben werden.

In einer vorteilhaften Ausgestaltung der Klemmanordnung ist der Klemmring nicht geschlossenen ausgeführt und ist auf das Rohr oder die Stange aufclipsbar, was die nachträgliche Ergänzung einer Anordnung um eine oder mehrere Passfedern vereinfacht.

In einer weiteren vorteilhaften Ausgestaltung der Klemmanordnung sind um den Umfang des Rohres oder der Stange verteilt mehrere parallel verlaufende Längsnuten ausgebildet. So können einfach Klemmanordnungen mit winkelmaßhaltigen Winkeln aufgebaut werden. Insbesondere sind die Längsnuten am Umfang azimutal um 45° bzw. 90° zueinander versetzt, so dass derartige gebräuchliche Winkel innerhalb einer Klemmanordnung leicht eingestellt und eingehalten werden können.

In einer weiteren vorteilhaften Ausgestaltung der Klemmanordnung ist die Nut des Klemmverbinders in einem Bereich der Aufnahme ausgebildet, der der Spanneinrichtung gegenüber liegt. In diesem Bereich weist der Klemmverbinder in der Regel genügend Material auf, um die Nut einbringen zu können, ohne die Stabilität der Klemmbacken zu beeinträchtigen.

Der Klemmverbinder kann beispielsweise ein Kreuzklemmverbinder, ein Winkelklemmverbinder, ein Parallelklemmverbinder oder ein Gelenkklemmverbinder sein. Er kann, ebenso wie die Passfeder bzw. der Passfederclip, aus Kunststoff gefertigt sein. Das Rohr oder die Stange kann aus Metall, insbesondere Aluminium, gefertigt sein, aber ebenso auch aus Kunststoff, insbesondere einem faserverstärktem Kunststoff.

Die Erfindung wird nachfolgend anhand eines Ausführungsbeispiels mithilfe von Figuren näher erläutert. Die Figuren zeigen:
- Figur 1a: eine beispielhafte Klemmanordnung zweier Rohre und eines Klemmverbinders mit Passfederclips;
- Figur 1b: die Klemmanordnung gemäß Figur 1a mit eingesetzten Passfederclips;
- Figur 2: der Klemmverbinder der Figuren 1a, b in einer Detaildarstellung;
- Figur 3: der Passfederclip der Figuren 1a, b in einer Detaildarstellung;
- Figur 4: eine Schnittdarstellung der Klemmanordnung aus Figur 1b;
- Figur 5a: eine weitere beispielhafte Klemmanordnung zweier Rohre und eines Klemmverbinders mit Passfederclips; und
- Figur 5b: die Klemmanordnung gemäß Figur 5a mit eingesetzten Passfederclips.

In den nachfolgend beschriebenen Figuren sind Ausführungsbeispiele erfindungsgemäßer Klemmanordnungen dargestellt. In allen Figuren kennzeichnen gleiche Bezugszeichen gleiche Elemente. Aus Gründen der Übersichtlichkeit ist nicht in jeder Figur jedes Element mit einem Bezugszeichen versehen.

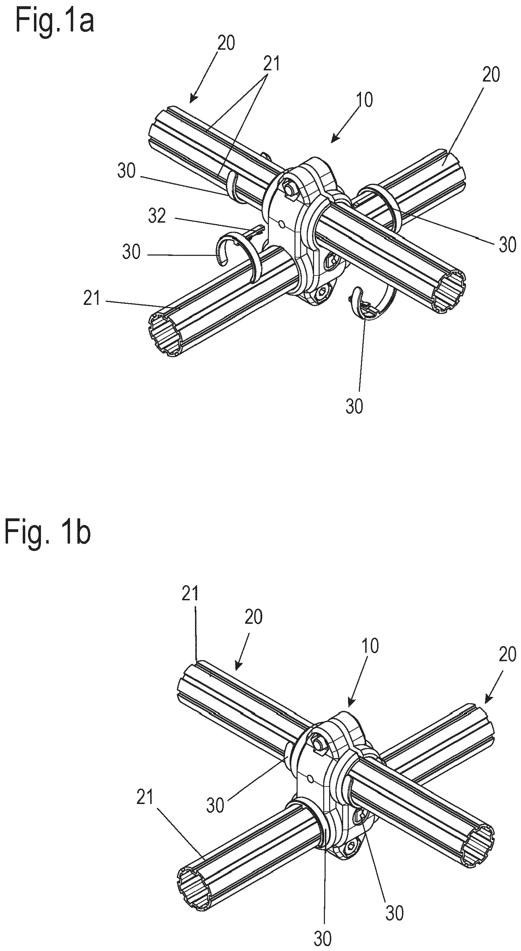

In den Figuren 1a und 1b ist zunächst in jeweils einer Schrägansicht eine Klemmanordnung, die Teil eines größeren Systems, zum Beispiel eines Gestells, sein kann, gezeigt. Die Klemmanordnung umfasst einen Klemmverbinder 10, der zwei im Querschnitt im Wesentlichen runde Rohre 20 miteinander verbindet. An Stelle der Rohre 20 können auch (Vollmaterial-) Stangen eingesetzt werden.

Im dargestellten Beispiel ist der Klemmverbinder 10 ein Kreuzverbinder, in dem die Rohre 20 unter einem Winkel von 90° zueinander eingespannt werden. In alternativen Ausgestaltungen kann der Klemmverbinder 10 auch als Winkelverbinder, Parallelverbinder oder Gelenkverbinder oder Klemmfuß usw. ausgebildet sein.

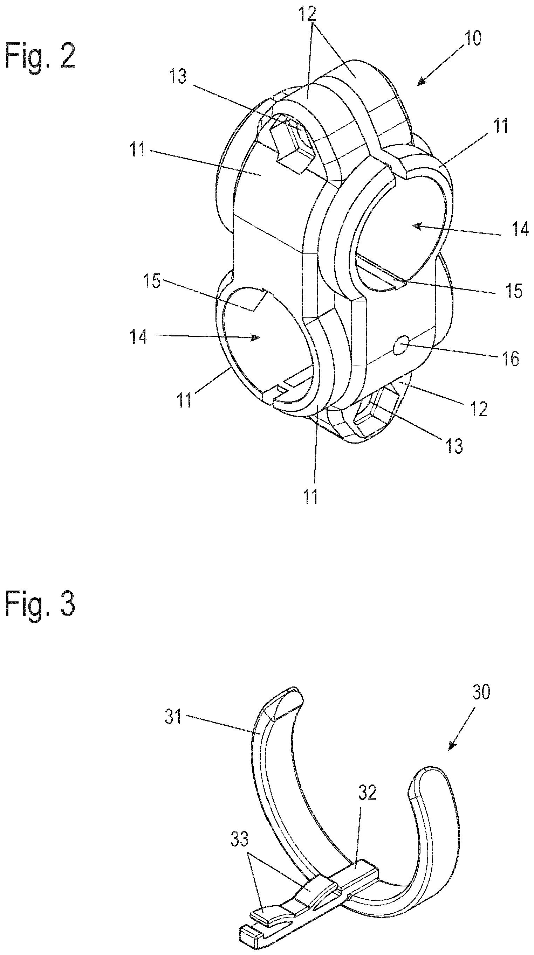

Der Klemmverbinder 10 ist in Figur 2 separat detaillierter dargestellt. Für jedes der Rohre 20 sind zwei Klemmbacken 11 ausgebildet, die zusammen eine (Rohr-) Aufnahme 14 bilden, in die das Rohr 20 eingesteckt wird. Im mittleren, zentralen Abschnitt des Klemmverbinders 10 sind die Klemmbacken 11 miteinander fest verbunden. An der jeweils gegenüberliegenden äußeren Seite verbleibt ein Spalt zwischen jeweils zwei einander zugeordneten Klemmbacken 11, wobei benachbart zu dem Spalt Vorsprünge 12 ausgebildet sind. Durch Bohrungen 13 in den Vorsprüngen 12 wird eine Spanneinrichtung, insbesondere eine Schraube, geführt, durch das die beiden Vorsprünge 12 aufeinander zu gezogen werden können, wodurch das in die Aufnahme 14 eingesetzte Rohr 20 eingespannt wird. Der Klemmverbinder 10 kann beispielsweise als Kunststoffspritzgussteil gefertigt sein, was kostengünstig ist und zu einem geringen Gewicht des Klemmverbinders 10 führt. In dem Fall kann innerhalb des Spalts zwischen den Klemmbacken 11 ein Steg verbleiben, der zu einer maßhaltigen Aufnahme 14 im Herstellungsprozess führt. Durch die Verformbarkeit des Kunststoffs steht dieser Steg einer Klemmung des Rohrs 20 nicht entgegen. Alternativ kann der Klemmverbinder 10 auch aus Aluminium oder Zink, z.B. in einem Druckgussverfahren, oder aus Stahl gefertigt sein.

Um bei der erfindungsgemäßen Klemmanordnung eine Verdrehung der Rohre 20 in den Aufnahmen 14 zu verhindern oder, in anderen Worten, um ein großes Drehmoment zwischen dem Klemmverbinder 10 und den Rohren 20 übertragen zu können, sind Passfederclips 30 vorgesehen, die im Verbindungsbereich zwischen dem Klemmverbinder 10 und dem Rohr 20 eingesetzt werden.

In Figur 1a sind jeweils vier derartiger Passfederclips 30 vor dem Einsetzen dargestellt. Figur 1b zeigt die Klemmanordnung mit eingesetzten Passfederclips 30. In Figur 3 ist der Passfederclip 30 in einer Schrägansicht vergrößert detailliert dargestellt.

Der Passfederclip 30 weist einen nicht geschlossenen Klemmring 31 auf, mit dem der Passfederclip 30 auf das Rohr 20 aufgeclipst werden kann. Der Passfederclip 30 ist aus einem elastischen Kunststoffmaterial gefertigt, so dass der Klemmring 31 weit genug aufgebogen werden kann, um radial auf das Rohr 20 aufgeclipst werden zu können. Am Klemmring 31 ist eine axial (also in Längsrichtung des Rohrs 20) hervorstehende Passfeder 32 ausgebildet, an der zusätzlich Federarme 33 ausgeformt sind.

Wie in Figur 2 zu sehen ist, ist in jeder der Aufnahmen 14 des Klemmverbinders 10 eine Nut 15 ausgebildet. Dazu korrespondierend weist das Rohr 20 an seiner Außenseite hier mehrere Längsnuten 21 auf. Im gezeigten Beispiel sind acht Nuten am Umfang vorgesehen, die jeweils azimutal um 45° zueinander versetzt sind. Beim Zusammensetzen der Klemmanordnung werden die Rohre 20 so in die Aufnahmen 14 eingesetzt, dass eine der Längsnuten 21 und die Nut 15 deckungsgleich übereinander liegen. Es entsteht ein Kanal zwischen dem Klemmverbinder 10 und dem Rohr 20, in den die Passfeder 32 des Passfederclips 30 eingeschoben wird. Nach dem Einschieben werden die Klemmbacken 11 mithilfe der Spanneinrichtung verspannt und das Rohr 20 im Klemmverbinder 10 eingeklemmt.

Axial wird das Rohr 20 durch die Klemmkräfte im Klemmverbinder 10 gehalten. Eine radiale Verdrehung des Rohrs 20 im Klemmverbinder 10 ist ebenfalls durch Klemmkräfte und zusätzlich durch einen Formschluss der Passfeder 32 in der Nut 15 bzw. der Längsnut 21 verhindert. Zusätzlich zur Haltekraft des Klemmrings 31 auf dem Rohr 20 sichern die Federarme 33 die Passfeder 32 gegenüber einem Herausrutschen aus dem Kanal zwischen dem Klemmverbinder 10 und dem Rohr 20. Gleichzeitig dienen sie einem Toleranzausgleich für die Tiefe der Nut 15 bzw. der Längsnut 21.

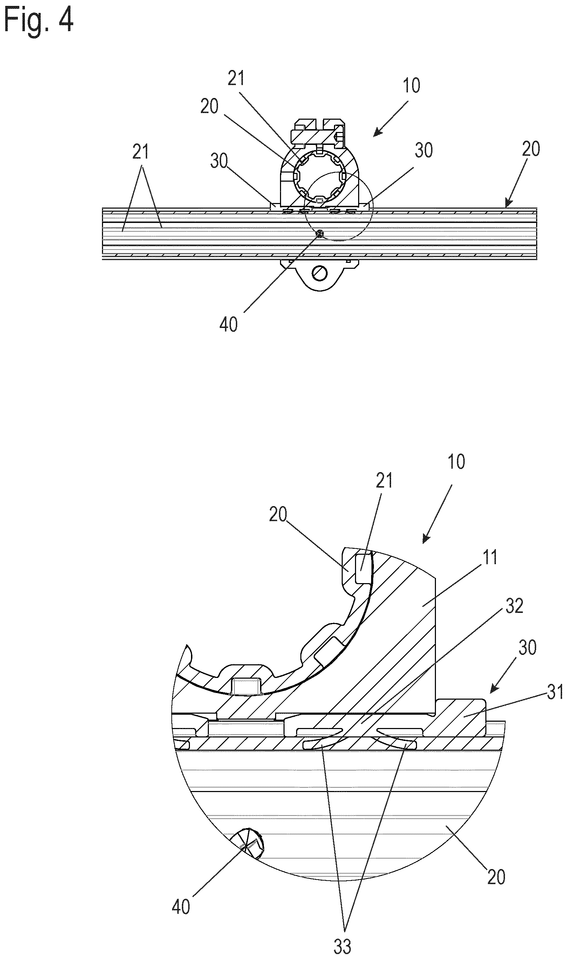

Im oberen Teil der Figur 4 ist der Verbindungsbereich zwischen dem Klemmverbinder 10 und dem Rohr 20 nochmals in Form einer Schnittzeichnung dargestellt. Der untere Teil der Figur 4 zeigt den Sitz der Passfedern 32 in dem gebildeten Kanal in einer Ausschnittvergrößerung aus dem oberen Teil detaillierter.

In einer Klemmanordnung können die Passfederclips 30 bedarfsweise eingesetzt und vorteilhaft auch nachgerüstet werden, wenn sich bei einzelnen der Verbindungen zwischen einem Klemmstück 10 und einem Rohr 20 Verdrehungen zeigen. Eine besonders gute Drehmomentsicherung wird erreicht, wenn an jeder Schnittstelle zwischen Klemmverbinder 10 und Rohr 20 zwei Passfederclips 30 eingesetzt werden, wie es auch in den Beispielen der Figuren 1a, b und 4 dargestellt ist.

Eine zusätzliche Verdrehsicherung kann durch eine Schraube erfolgen, die durch eine Klemmbacke 11 in das Rohr 20 eingeschraubt wird. Diese zusätzliche optionale Verdrehsicherung verhindert gleichzeitig auch ein Durchrutschen des Rohrs 20 in axialer Richtung.

In der Figur 4 ist eine solche Sicherungsschraube 40 mittig im Rohr 20 im Bereich des Klemmverbinders 10 zu erkennen. Dazu ist (vgl. Figur 2) im Klemmverbinder 10 eine Bohrung 16 vorgesehen, durch die diese Sicherungsschraube 40 führt. Zum Einbringen der Sicherungsschraube 40 kann nach dem Zusammenbau der Klemmanordnung ein Loch durch die Bohrung 16 in das Rohr 20 gebohrt werden, um die Sicherungsschraube 40 in das Rohr 20 einzuschrauben. Bevorzugt kann zu diesem Zweck eine selbstschneidende Sicherungsschraube 40 verwendet werden. Alternativ kann auch eine fließformende Schraube als Sicherungsschraube 40 eingesetzt werden, wodurch der separate Schritt, ein Loch in das Rohr 20 zu bohren, entfällt.

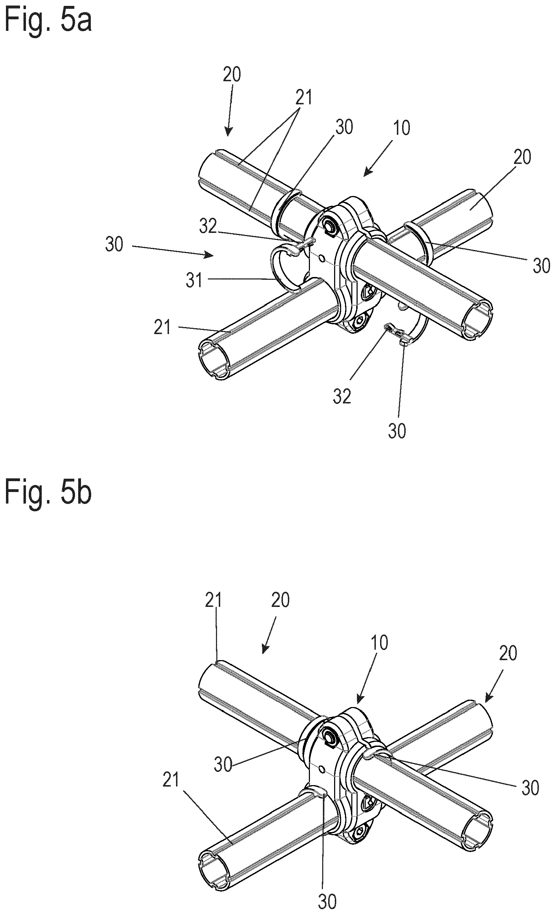

In den Figuren 5a und 5b ist in gleicher Weise wie in den Figuren 1a und 1b ein weiteres Ausführungsbeispiel einer Klemmanordnung dargestellt.

Wiederum ist beispielhaft ein als Kreuzverbinder ausgestalteter Klemmverbinder 10 gezeigt, der zwei sich unter einem Winkel von 90° kreuzende Rohre 20 einspannt. Passfederclips 30 sind verwendet, um eine Verdrehung der Rohre 20 in Aufnahmen des Klemmverbinders 10 zu verhindern und die Übertragung eines großen Drehmoments zwischen dem Klemmverbinder 10 und den Rohren 20 zu ermöglichen. Figur 5a zeigt die Anordnung vor einem Einsetzen der Passfederclips 30 und Figur 5b mit eingesetzten Passfederclips 30.

Bei dem in den Figuren 5a und 5b dargestellten Ausführungsbeispiel entspricht der Klemmverbinder 10 dem des ersten Ausführungsbeispiels. Die Rohre 20 sind dagegen unterschiedlich ausgebildet. Bei diesem Beispiel sind an ihrer Außenseite jeweils vier Längsnuten 21 verteilt über den Umfang vorhanden und nicht acht Nuten wie beim ersten Ausführungsbeispiel. Entsprechend sind die vier Längsnuten 21 hier azimutal um 90° zueinander versetzt. Für viele Anwendungszwecke ist eine Verdrehbarkeit in Schritten von 90° ausreichend.

Ein weiterer Unterschied betrifft die Ausgestaltung der Passfederclips 30, die wiederum einen Klemmring 31 und eine Passfeder 32 aufweisen. Bei dieser Ausgestaltung des Passfederclips 30 ist die Passfeder 32 im Bereich eines Endabschnitts des Klemmrings 31 angeordnet und nicht wie beim ersten Ausführungsbeispiel mittig am Klemmring 31.

### Bezugszeichenliste

- 10: Klemmverbinder
- 11: Klemmbacke
- 12: Vorsprung
- 13: Bohrung
- 14: Rohraufnahme
- 15: Nut
- 16: Bohrung

- 20: Rohr
- 21: Längsnut

- 30: Passfederclip
- 31: Klemmring
- 32: Passfeder
- 33: Federarm

- 40: Sicherungsschraube

## Patentansprüche

1. Anordnung mit mindestens einem Klemmverbinder (10) mit mindestens zwei Klemmbacken (11), die über eine Spanneinrichtung verspannbar sind und die eine Aufnahme (14) für ein Rohr (20) oder eine Stange bilden, und mindestens einem in der Aufnahme (14) geklemmten Rohr (20) oder einer in der Aufnahme (14) geklemmten Stange, wobei das Rohr (20) oder die Stange an einer Außenseite zumindest abschnittsweise mindestens eine Längsnut (21) zur Aufnahme einer Passfeder (32) aufweist, **dadurch gekennzeichnet, dass**
der Klemmverbinder (10) an einer Klemmfläche der Aufnahme (14) eine ebenfalls in Längsrichtung des Rohres (20) oder der Stange verlaufende Nut (15) aufweist, wobei die Passfeder (32) in die Längsnut (21) und die Nut (15) eingesetzt ist und wobei die Passfeder (32) an einem Klemmring (31) angeordnet ist, der das Rohr (20) oder die Stange zumindest teilweise umgreift.

2. Anordnung nach Anspruch 1, bei der um den Umfang des Rohres (20) oder der Stange verteilt mehrere parallel verlaufende Längsnuten (20) ausgebildet sind.

3. Anordnung nach Anspruch 1 oder 2, bei der die Nut (15) in einem Bereich der Aufnahme (14) ausgebildet ist, der der Spanneinrichtung gegenüber liegt.

4. Anordnung nach einem der Ansprüche 1 bis 3, bei der der Klemmring (31) nicht geschlossenen ist und auf das Rohr (20) oder die Stange aufclipsbar ist.

5. Anordnung nach einem der Ansprüche 1 bis 4, bei der an der Passfeder (32) Rast- oder Klemmmittel ausgebildet sind, die die Passfeder (32) in der Nut (15) und/oder der Längsnut (21) fixieren.

6. Anordnung nach Anspruch 5, bei der die Rast- oder Klemmmittel Federarme (33) sind.

7. Anordnung nach einem der Ansprüche 1 bis 6, bei der der Klemmverbinder (10) ein Kreuzklemmverbinder, ein Winkelklemmverbinder, ein Parallelklemmverbinder oder ein Gelenkklemmverbinder ist.

8. Anordnung nach einem der Ansprüche 1 bis 7, bei der der Klemmverbinder (10) und/oder die Passfeder (32) aus Kunststoff gefertigt ist.

9. Anordnung nach einem der Ansprüche 1 bis 8, bei der das Rohr (20) oder die Stange aus Metall, insbesondere Aluminium, gefertigt ist.
